# EUROPEAN PATENT SPECIFICATION

(11) **EP 1 893 921 B1**
(45) Date of publication and mention of the grant of the patent: **09.09.2015**
(21) Application number: 06747574.9
(22) Date of filing: 22.06.2006
(51) Int. Cl.: F24F 11/00, G05D 23/19

(54) **VENTILATION SYSTEM WITH CONTROL MEANS**
LÜFTUNGSSYSTEM MIT STEUERMITTEL
SYSTÈME DE VENTILATION AVEC ORGANES DE COMMANDE

(30) Priority: 24.06.2005 EP 05076463
(43) Date of publication of application: 05.03.2008
(73) Proprietor: Nederlandse Organisatie voor toegepast- natuurwetenschappelijk onderzoek TNO, 2595 DA 's-Gravenhage (NL)
(72) Inventor: KNOLL, Bastiaan, NL-2671 DR Naaldwijk (NL)
(74) Representative: Hatzmann, Martin
(86) International application number: PCT/NL2006/000306
(87) International publication number: WO 2006/137731

(56) References cited:
- EP-A- 0 585 133
- EP-A- 0 632 234
- DE-A1- 4 333 194
- DE-A1- 10 033 209
- US-A1- 2005 095 978

## Description

### Field

The invention concerns a system for ventilating rooms via different ventilation channels, which system comprises detection means for the detection of air variables in those rooms resp. ventilation channels, and also control means for setting resp. changing ventilation parameters for those rooms resp. ventilation channels.

### Background

The ventilation of houses is done mainly via manually controlled natural supply openings (e.g. grids or windows) in the facades in combination with natural or mechanical exhaust. An upcoming alternative is balance ventilation (mechanical supply and exhaust). Only in the very newest system versions natural supply openings are regulated automatically in order to meet fluctuations in the ventilation need and to correct for wind variations (see for example patent document US-A-2005/095978). Sometimes the capacity of the exhaust is then geared to that.

To determine changing ventilation needs per room, detection of air variables by e.g. air quality sensors is applied rarely anymore. There are already systems which set the ventilation via a preprogrammed use as is also often done at thermostats for domestic heating. At the most a single, central sensor in the exhausted air is used to determine the ventilation need, because sensors are expensive. Since such a central sensor measures a mix concentration of the entire dwelling, the average ventilation level can be regulated by that, but not the right distribution over the rooms.

A further problem of the current ventilation systems, no matter how good regulated, is that wind variations still cause important differences in the ventilation per room. Therefore rooms on the lee side often are underventilated while the total ventilation is much more than the total need. In the underventilated rooms then there is talk of insufficient air quality, which can lead to health damage and nuisance, while the excessive total ventilation leads to excessive energy use.

As indicated, current systems can not or not solve this problem unpunished. With need-dependent regulation per room this would be able for an important part. Per room a sensor then would be necessary. However, the costs of this form a breaking point. Even though it would be possible to decrease the sensor costs drastically, even then there is a problem that not always sufficient driving powers are available to realize sufficient ventilation in rooms at the lee side. By increasing the power of a central exhaust ventilator this can be provided, however resulting in extra energy use as well as possible overventilation (heat loss, draught, noise) of the remaining rooms.

### Summary

The ventilation system presented below aims to meet said objections, where, among others, in each connected room the desired air quality can be maintained with a minimal total flow through the ventilation system, which flow, moreover, is distributed so that each room is ventilated exactly according to its need. Because the new ventilation system even is able to allocate the maximum attainable total flow just to one room, there can be reacted to an important larger variation in demand than with a conventional system.

To obtain all this there is provided a system for ventilating rooms via different ventilation channels which system comprises detection means for the detection of air variables in those rooms resp. ventilation channels, and control means for setting resp. changing ventilation parameters for those rooms resp. ventilation channels, said detection means comprising, per group of ventilation channels, a common sensor module, adapted for periodically, per ventilation channel or subgroup of ventilation channels, measuring of one or more air variables and transfering those variables to the control means.

Preferably said sensor module is connected to drive means, connecting the sensor module periodically to each ventilation channel belonging to said group resp. to each subgroup of ventilation channels, belonging to said group. The ventilation channels or subgroup of ventilation channels belonging to said group can e.g. end in a detection room in which the sensor module is driven by the drive means along the ventilation channels ending in that detection room and thus is periodically connected to each ventilation channel belonging to said group resp. to each subgroup of ventilation channels belonging to said group. Preferably the ventilation channels or subgroup of ventilation channels belonging to said group end in the detection room by means of circularly positioned outlet openings, the drive means driving the sensor module along these circular outlet openings via a rotating movement. Also non-circulating concepts are conceivable, e.g. linear ones.

The detection room can be connected with a common air exhaust, which on its turn may comprise a common ventilator. Said control means may comprise flow control devices (e.g. control valves) in the ventilation channels concerned and/or be connected to such control devices.

The flow control devices can be adjusted each with its own actuator or by means of an actuator which - just like the sensor module - is driven by said drive means. The flow controle devices concerned can e.g. be placed or end in the detection room and the drive means then can connect the actuator periodically with those flow control devices. In this way both the sensor module and the actuator can periodically be brought in touch with the different ventilation channels by the same drive means: the sensor module to sample the ventilation air and the actuator to - if necessary - adjust the control device concerned under control of the control means (in this case a measure and control unit). The control means e.g. may, by means of air which is sampled during a cycle in a certain air channel, by analysis of that air sample, determine that the moisture in the room concerned is too high and that the ventilation therefor should be raised. Then the control means can arrange that the actuator, connected to the flow control device of the ventilation channel concerned, adjusts the control device so that the flow increases.

The ventilation system presented here is described below in more detail by means of an exemplary embodiment.

### Exemplary embodiment

Figure 1 shows a first exemplary embodiment of the above presented ventilation system.
Figure 2 shows a second exemplary embodiment of the above presented ventilation system.

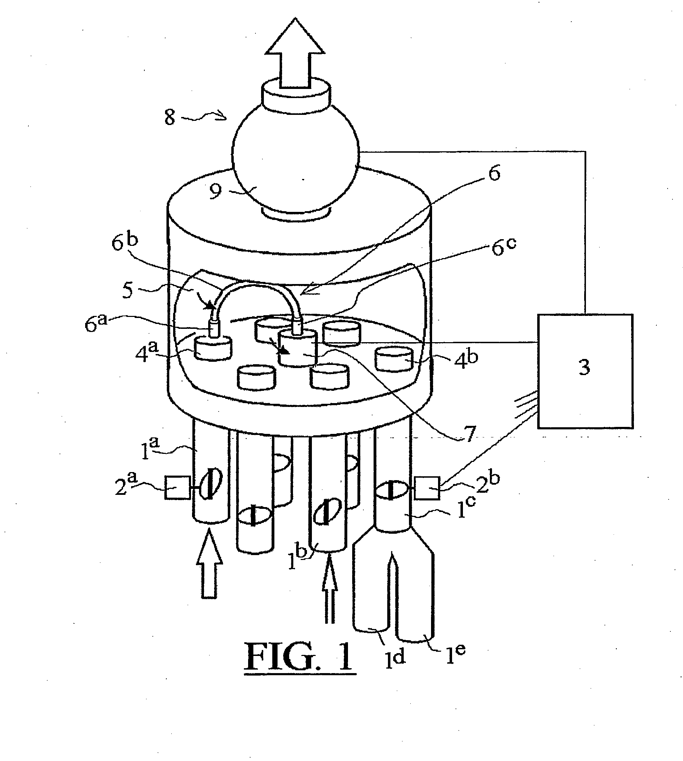

The system shown in figure 1 for ventilating (not-shown) rooms comprises a group of different ventilation channels 1 connected with these rooms (a,b,c,....) which comprises remote controllable control valves 2(a,b,...). By means of these valves 2 a measuring and control unit 3 may individually set and if necessary change the air flow through the ventilation channels 1. It is noted that some channels, such as the channels 1d and 1e, can be united to a subgroup of which the channels 1 (d,e) at their end not shown e.g. can run to two different places in one same (e.g. some larger) room to be ventilated. The air flow in all ventilation channels belonging to that subgroup can in such a case be controlled by a common control valve, viz. valve 2b.

The ventilation channels 1 end (4a,4b) in a less or more drum-shaped collection room 5, in which a sensor module 6 - comprising a nozzle 6a, a sample pipe 6b and a sensor unit 6c (which may comprise one or more different sensor elements, e.g. for moisture, temperature, CO₂, smoke etc.)- is driven by a drive motor 7 along the circularly placed outlets 4 (a,b,...) of the ventilation channels. Thus the sensor module 6 is alternately connected to each ventilation channel 1 (a,b,c,...) belonging to said group resp. to each subgroup of ventilation channels 1 (d,e) belonging to said group and can sample the air flowing out from there periodically.

So in this way one sensor module 6 can measure one or more air variables for the whole group of ventilation channels and the rooms connected to them, e.g. the moisture content, the temperature, the CO₂ content etc. By passing on the so measured values to the measuring and control unit 3, this measuring and control unit 3 is enabled, by means of adjusting the control valves 2 in the ventilation channels 1, to adjust the ventilation parameters for the different rooms so that the climate remains satisfactory everywhere.

The collection room 5 is connected to a common air exhaust 8 which comprises a common ventilator 9 which in this exemplary embodiment also can be controlled (rotational speed, power, drain) by the measuring and control unit 3.

The above presented system can thus provide to ventilate optimally (temporary) damp rooms (bathroom, toilet, kitchen) and also residence rooms (living and bedrooms) of e.g. a house. The air flows from the ventilations channels connected to the different rooms are gathered in the 'collection drum' 5, to which the central exhaust ventilator 9 is connected. The ventilation channels 1 are connected to the outlets 4 in the bottom of the collection drum 5, at equal distances from the axis. Round the same axis the sample pipe 6b turns round evenly, in a calm tempo driven by the drive motor 7. With that the air quality is measured successively above each outlet 4. That happens e.g. with the help of a standard CO₂, moisture or "mixed-gas" sensor in sensor unit 6c. If the concentration in the ventilation channel 4 concerned is higher than the desired value, the valve 2 in the ventilation channel 4 is opened further under control of measuring and control unit 3. Is the valve concerned already opened entirely, the measuring and control unit 3 can decide to let the central exhaust ventilator 9 turn faster. This can also be the case if the mix concentration in the collection drum 5, as measured between two outlets 4, is too high. If the concentration in an outlet is lower than the desired value, the concerned valve 2 is closed further. In this way there it is provided that each room at any moment gets the ventilation desired there. However, it is prevented that the total ventilation at any moment is higher than strictly necessary. Even if a room is unused and therefore the valve 2 in the ventilation channel concerned 4 is (nearly) closed, the system remains functional, because then the small leakage current existing under influence of the , underpressure of the exhaust-ventilator 9 is sufficient for sampling by the sensor module 6.

The exhaust ventilator 9, collection drum 5 with sample section (detection module 6) and connecting pipes (the last part of the air channels 4 in which the valves 2 are applied) can be manufactured as one integrated product, which can be offered to the market together with the measuring and control unit 3.

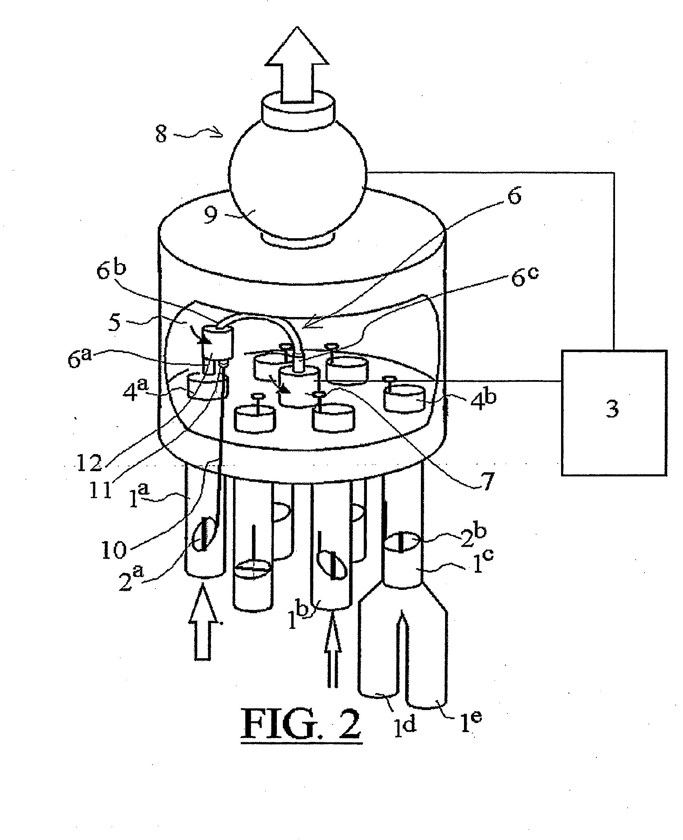

Figure 2 shows about the same system as in figure 1, however in this version the valves 2 can be adjusted by a common actuator 12 which is moved by the same drive motor 7 as used for driving the sensor module 6a. The valves 2 are adjustable from the collection room 5 by means of valve staves 10. Driven by the drive motor 7, the actuator can periodically be connected to each of these valves by means of an e.g. mechanical or magnetic coupling 11. It is imaginable that that coupling comprises an fixing plate, at the end of the valve stave 10, and a switchable electromagnet at the end of an (extendable) adjustment shaft at the side of the actuator 12. If the drive motor 7 e.g. is a stepping motor, this can be stopped for a while when the sensormodule 6a and the actuator 12 have been arrived at a ventilation channel. The electromagnet then can be energized by the control unit 3, by which the adjustment shaft temporarily is coupled with the valve stave. Then the control unit 3 can, by shifting the adjustment shaft of the actuator, via the valve stave 10, adjust the valve concerned 2 in the right position. If the air quality does not need to be changed, the valve can stay in the same position. In that case the actuator 12 does not need to be coupled with the valve stave 10 concerned and thus the rotation does not need to be interrupted (assuming that during the passing of the sensor module a sufficient sample of the ventilation air can be taken).

So, in this way both the sensor module 6a and the actuator 12 can periodically be brought into the vicinity of the various ventilation channels, by means of the same drive motor, the sensor module to sample the ventilation air and the actuator -only if necessary- to adjust the control device concerned under control of the measuring and control unit 3.

It is noted that, if desired, more than one common sensor module 6a and/or common actuator 12 may be provided. E.g. not simply realized with one "arm" 6a, as in the figures 1 and 2, but e.g. double, with two arms extending oppositely to each other. Also a triple or fourfold version is possible.

Summarizing, the advantages of this system are:
- No high costs for sensors, because with one sensor all (or a group of) rooms can be sampled individually;
- No extra costs for measuring pipes, because the exhaust channels 1 with their outlets 4 function so via the scanning sensor module 6 ;
- No high costs for valve motors, because with one actuator 12 and coupling 11 all valves 2 can be adjusted individually via the valve staves 10;
- The possibility to build together the collection drum 5, the ventilator 9, the valves 2 and the measuring and control unit 3 to a compact whole and to be able to install it as a whole;
- Always sufficient ventilation in each room, therefore an optimal air quality, also in situations where normally would be talk of insufficient driving powers;
- Enlargement of the setting range of the ventilation, because the available capacity is not (as is usual) distributed proportionally among all connected rooms, but is only allocated to the rooms where a need exists;
- Minimal energy use for ventilation by optimal, need dependant control, providing a selective pressure influencing by the exhaust ventilator 9 in only the rooms where that is necessary in an extent which is just sufficient;
- Better building-in possibilities by the restricted size of the pipe drains for the ventilation channels (in particular of interest in case of renovation);
- All essential functionality contained in one complete product.

## Claims

1. System for ventilating rooms via different ventilation channels (1), which system comprises detection means for the detection of air variables in those rooms respectively ventilation channels, and control means (2,3) for setting respectively changing ventilation parameters in those rooms respectively ventilation channels, **characterized in that** said detection means comprise, per group of ventilation channels, a common sensor module (6), adapted for measuring periodically, per ventilation channel or a subgroup of ventilation channels, one or more air variables and for transfering those one or more air variables to the control means.

2. System according to claim 1, where the sensor module is connected with drive means (7), connecting the sensor module periodically to each ventilation channel or subgroup of ventilation channels, belonging to said group .

3. System according to claim 2, where the ventilation channels or subgroup of ventilation channels belonging to said group, end in a collection room (5) in which the sensor module is driven by the drive means along the ventilation channels which end in that collection room and thus is periodically connected to each ventilation channel or subgroup of ventilation channels belonging to said group.

4. System according to claim 3 where the ventilation channels or subgroup of ventilation channels belonging to said group, end in the detection room by means of circularly positioned outlet openings (4) and where the drive means drive the sensor module along these circular outlet openings via a rotating movement.

5. System according to claim 3, where the collection room is connected to a common air exhaust (8).

6. System according to claim 5, where the common air exhaust comprises a common ventilator (9).

7. System according to claim 1, where the control means comprise flow control devices (2) in the ventilation channels concerned being adjustable from a measuring and control unit (3).

8. System according to claim 2 and 7, comprising means (10,11) which are adapted for adjusting the flow control devices by a common actuator (12), which actuator is driven by said drive means (7).

9. System according to claim 8, where the actuator is controlled by the measuring and control unit (3).

## Patentansprüche

1. System zum Belüften von Räumen über verschiedene Belüftungskanäle (1), umfassend Detektionsmittel zum Detektieren von Luftvariablen in diesen Räumen bzw. Belüftungskanälen und Steuermittel (2, 3) zum Einstellen bzw. Ändern der Belüftungsparameter in diesen Räumen bzw. Belüftungskanälen, **dadurch gekennzeichnet, dass** die Detektionsmittel pro Gruppe von Belüftungskanälen ein gemeinsames Sensormodul (6) umfassen, geeignet, um periodisch pro Belüftungskanal oder Teilgruppe von Belüftungskanälen eine oder mehrere Luftvariablen zu messen und diese eine oder mehreren Luftvariablen an die Steuermittel zu übertragen.

2. System nach Anspruch 1, wobei das Sensormodul mit Antriebsmitteln (7) verbunden ist, die das Sensormodul periodisch mit jedem Belüftungskanal oder jeder Teilgruppe von Belüftungskanälen, die zu der Gruppe gehören, verbinden.

3. System nach Anspruch 2, wobei die Belüftungskanäle oder die Teilgruppe von Belüftungskanälen, die zu der Gruppe gehören, in einem Sammelraum (5) enden, in dem das Sensormodul von den Antriebsmitteln entlang der Belüftungskanäle, die in diesem Sammelraum enden, angetrieben wird und also periodisch mit jedem Belüftungskanal oder jeder Teilgruppe von Belüftungskanälen, die zu der Gruppe gehören, verbunden wird.

4. System nach Anspruch 3, wobei die Belüftungskanäle oder die Teilgruppe von Belüftungskanälen, die zu der Gruppe gehören, mittels kreisförmig angeordneten Auslassöffnungen (4) in dem Detektionsraum enden und wobei die Antriebsmittel das Sensormodul entlang dieser kreisförmigen Auslassöffnungen über eine Rotationsbewegung antreiben.

5. System nach Anspruch 3, wobei der Sammelraum mit einem gemeinsamen Luftabzug (8) verbunden ist.

6. System nach Anspruch 5, wobei der gemeinsame Luftabzug einen gemeinsamen Lüfter (9) umfasst.

7. System nach Anspruch 1, wobei die Steuermittel Flusssteuerungsvorrichtungen (2) in den betreffenden Belüftungskanälen umfassen, die über eine Mess- und Steuereinheit (3) einstellbar sind.

8. System nach Anspruch 2 und 7, umfassend Mittel (10, 11), die zum Einstellen der Flusssteuerungsvorrichtungen durch ein gemeinsames Betätigungselement (12) geeignet sind, wobei das Betätigungselement von den Antriebsmitteln (7) angetrieben wird.

9. System nach Anspruch 8, wobei das Betätigungselement durch die Mess- und Steuervorrichtung (3) gesteuert wird.

## Revendications

1. Système pour ventiler des salles par l'intermédiaire de différents canaux de ventilation (1), lequel système comprend des moyens de détection pour la détection de variables de l'air respectivement dans ces canaux de ventilation de salles, et des moyens de commande (2, 3) pour fixer respectivement des paramètres de ventilation changeant respectivement dans ces canaux de ventilation de salles, **caractérisé en ce que** les moyens de détection comprennent par groupe de canaux de ventilation, un module de détection commun (6), adapté pour mesurer périodiquement, par canal de ventilation ou sous-groupe de canaux de ventilation, une ou plusieurs variables de l'air et transférer ces une ou plusieurs variables de l'air aux moyens de commande.

2. Système selon la revendication 1, où le module de détection est relié à des moyens d'entraînement (7), reliant périodiquement le module de détection à chaque canal de ventilation ou sous-groupe de canaux de ventilation, appartenant au groupe.

3. Système selon la revendication 2, où les canaux de ventilation ou le sous-groupe de canaux de ventilation appartenant au groupe, se terminent dans une salle de recueil (5) dans laquelle le module de détection est entraîné par les moyens d'entraînement le long des canaux de ventilation qui se terminent dans cette salle de recueil et ainsi est périodiquement relié à chaque canal de ventilation ou sous-groupe de canaux de ventilation appartenant au groupe.

4. Système selon la revendication 3, où les canaux de ventilation ou le sous-groupe de canaux de ventilation appartenant au groupe, se terminent dans la salle de détection par l'intermédiaire d'ouvertures de sortie positionnées circulairement (4) et où les moyens d'entraînement entraînent le module de détection le long de ces ouvertures de sortie circulaires par l'intermédiaire d'un mouvement de rotation.

5. Système selon la revendication 3, où la salle de recueil est reliée à un échappement d'air commun (8)

6. Système selon la revendication 5, où l'échappement d'air commun comprend un ventilateur commun (9).

7. Système selon la revendication 1, où les moyens de commande comprennent des dispositifs de commande d'écoulement (2) dans les canaux de ventilation concernés, qui sont ajustables à partir d'une unité de commande et de mesure (3).

8. Système selon les revendications 2 et 7, comprenant des moyens (10, 11) qui sont adaptés pour ajuster les dispositifs de commande d'écoulement par un actionneur commun (12), lequel actionneur est entraîné par les moyens d'entraînement (7).

9. Système selon la revendication 8, où l'actionneur est commandé par l'unité de commande et de mesure (3).
